# EUROPÄISCHE PATENTSCHRIFT

(11) **EP 2 850 935 B1**
(45) Veröffentlichungstag und Bekanntmachung des Hinweises auf die Patenterteilung: **14.06.2017**
(21) Anmeldenummer: 14176981.0
(22) Anmeldetag: 15.07.2014
(51) Int. Cl.: A01F 7/06, A01F 12/20, A01F 12/22, A01F 12/24, A01F 12/26

(54) **Abscheidevorrichtung**
Separation device
Dispositif de séparation

(30) Priorität: 24.09.2013 DE 102013110542
(43) Veröffentlichungstag der Anmeldung: 25.03.2015
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Pellmann, Markus, 48336 Sassenberg (DE)

(56) Entgegenhaltungen:
- EP-A2- 2 298 063
- EP-A2- 2 359 677
- WO-A1-2010/047430
- US-A- 4 248 248
- US-A1- 2002 187 820
- US-A1- 2012 214 560

## Beschreibung

Die vorliegende Erfindung betrifft eine Abscheidevorrichtung gemäß dem Oberbegriff des Anspruches 1.

Abscheidevorrichtungen der eingangs genannten Art können als Axialabscheiderotoren eines Mähdreschers ausgeführt sein, welche der Auftrennung von durch den Mähdrescher aufgenommenen Erntegutes in seine unterschiedlichen Bestandteile sowie deren Separierung und Abscheidung dienen. Hierzu wird das Erntegut von der Abscheidevorrichtung in einen Kornbestandteil und einen Nichtkornbestandteil, wie Stroh und Spreu, durch einen Bearbeitungsprozess, der physisch auf das Erntegut einwirkt, aufgetrennt.

Aus der EP 2 298 063 A2 ist eine Abscheidevorrichtung bekannt, die als sogenannter Axial-Dresch-Trennrotor ausgeführt ist. Diesem Axial-Dresch-Trennrotor kommt die Aufgabe zu, in dem Erntegut enthaltenes Korn in einem ersten Schritt durch Ausdreschen aus diesem zu gewinnen, wobei das Korn von Nichtkornbestandteilen separiert wird. Das Korn wird hierzu in einem sich einem Einlaufbereich des Axial-Dresch-Trennrotors anschließenden Dreschabschnitt ausgedroschen und größtenteils abgeschieden. Teile des ausgedroschenen Korns gelangen jedoch zusammen mit den Nichtkornbestandteilen in den nachfolgenden Abscheidebereich des Axial-Dresch-Trennrotors, in welchem das verbleibende Korn aus den Nichtkornbestandteilen ausgeschieden wird. Der Axial-Dresch-Trennrotor ist in seinem Dreschabschnitt mit als Leisten ausgebildeten Erntegutbehandlungselementen ausgeführt, die sich im Wesentlichen quer zur Rotationsrichtung des Axial-Dresch-Trennrotors erstrecken. Die Leisten stehen dabei in unmittelbarem Eingriff mit dem Erntegut, welches eine hohe abrasive Wirkung auf die Leisten ausübt. Gemäß der EP 2 298 063 A2 sind die Leisten mit einem kreisförmigen Querschnitt ausgeführt, um Kornbruch zu reduzieren. Die Leisten sind ihrerseits auf einem rampenförmigen, in Rotationsrichtung des Axial-Dresch-Trennrotors abfallenden Trägerelement angeordnet, welches in den Erntegutstrom hineinragt. Das rampenförmige Trägerelement weist eine im Querschnitt rechtwinklig ausgeformte Vorderseite auf, um eine für das Ausdreschen erforderliche Aggressivität zu erzielen. Der Verschleiß, der an der scharfkantigen Vorderkante des rampenförmigen Trägerelementes auftritt, ist entsprechend hoch, was auf die hohe Flächenpressung in diesem Bereich zurückzuführen ist, die das Erntegut auf das Trägerelement, insbesondere auf die dem Erntegutstrom zugewandte Vorderkante, ausübt. Entsprechend wird auch eine Beschichtung der Oberfläche des Elementes, welche zu Verschleißschutzzwecken aufgebracht ist, durch das Erntegut abgetragen, so dass ein regelmäßiger, in kurzen zeitlichen Abständen erfolgender Austausch des Trägerelementes und mit diesem auch der darauf befindlichen Leisten erforderlich wird.

Aus der WO 2010/ 047430 A1 ist eine als Dreschrotor ausgeführte Abscheidevorrichtung bekannt, welche in drei Abschnitt unterteilt ist. Im ersten Abschnitt sind einzelne Dreschelemente in axialer Richtung des Dreschrotors hintereinander auf einer Leiste angeordnet. Der zweite und dritte Abschnitt sind jeweils mit scharfkantig ausgeführten Leisten versehen.

Der Erfindung liegt die Aufgabe zugrunde, eine Abscheidevorrichtung gemäß dem Oberbegriff des Anspruches 1 dahingehend weiterzuentwickeln, dass höhere Standzeiten der dem Verschleiß besonders ausgesetzten Erntegutbehandlungselemente erreicht werden.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß Anspruch 1 wird vorgeschlagen, dass das mindestens eine als Leiste ausgeführte Erntegutbehandlungselement, das einen im Wesentlichen quaderförmigen Querschnitt aufweist, eine entgegen einer Förderrichtung des Erntegutes weisende Vorderkante mit einem strömungstechnisch optimierten, gekrümmten Verlauf aufweist, wobei die in axialer Richtung des Erntegutbehandlungselementes verlaufende Vorderkante den Übergang von einem im Wesentlichen senkrechten Abschnitt des Erntegutbehandlungselementes zu einem im Wesentlichen waagerecht verlaufenden Abschnitt bildet. Auf diese Weise lässt sich die Flächenpressung des mit dem Erntegut zuerst in Berührung kommenden Abschnittes des Erntegutbehandlungselementes reduzieren, so dass der Verschleiß reduziert ist. Die für den Ausdruschprozess notwendige Aggressivität, mit der auf das Erntegut eingewirkt wird, ist durch den im Wesentlichen quaderförmigen Querschnitt gegeben. Insbesondere stellt sich durch den strömungstechnisch optimierten Verlauf eine nahezu konstante Flächenpressung ein, die von dem Erntegutstrom auf die Vorderkante des Erntegutbehandlungselementes aufgeprägt wird. Die von dem Erntegut aufgebrachte Flächenpressung kann durch den Verlauf der Vorderkante variiert werden. Insbesondere ist eine Anpassung des gekrümmten Verlaufs der Vorderkante an unterschiedliche Erntegutarten möglich. Hierdurch kann das unterschiedliche, mit der jeweiligen Erntegutart einhergehende Verschleißverhalten Berücksichtigung finden.

Vorzugsweise kann der Verlauf der Vorderkante konvex sein. Hierdurch kann eine sanfte Gutumlenkung im Bereich der Vorderkante erreicht werden. Im Gegensatz dazu könnte eine konkav ausgestaltete Vorderkante ein Aushöhlen des Erntegutbehandlungselementes bewirken, was mit einem erhöhten Verschleiß einherginge.

Die Vorderkante ist zumindest abschnittsweise mit einer Beschichtung zur Erhöhung der Verschleißbeständigkeit versehen sein. Hierdurch wird die Standzeit des Erntegutbehandlungselementes zusätzlich erhöht. Zudem wird durch den strömungstechnisch optimierten, gekrümmten der Vorderkante des Erntegutbehandlungselementes die Beständigkeit der Beschichtung selbst erhöht. Das Erntegutbehandlungselement besteht aus einem Werkstoff mit vergleichsweise geringer Härte. Die strömungstechnisch optimierte Vorderkante, die der abrasiven Wirkung des Erntegutstromes am stärksten ausgesetzt ist, kann mit einer Beschichtung hoher Härte versehen werden. Die zumindest abschnittsweise Beschichtung erfolgt in Abhängigkeit von der zu erwartenden Flächenpressung, die von dem Erntegut auf das Erntegutbehandlungselement ausgeübt wird.

Vorzugsweise kann in hochbeanspruchten Bereichen des Erntegutbehandlungselementes bei dessen Herstellung eine Materialreserve anhäufbar sein. Diese Materialreserve kann als Verschließreserve dienen. Der Aufbau der Materialreserve kann durch geeignete Fertigungsverfahren wie Gusstechnik, Schmiedetechnik oder Warmumformung erreicht werden

Hierbei kann der Krümmungsradius der Vorderkante des Erntegutbehandlungselementes in Abhängigkeit von dem Material, aus dem die Beschichtung besteht, variieren. Mit zunehmender Materialhärte der auf die Vorderkante aufgebrachten Beschichtung kann der Krümmungsradius reduziert werden. Die Beschichtung kann durch gängige Beschichtungsverfahren wie thermisches Spritzen, Auftragsschweißen, Sintern, Laserbeschichten, chemische Gasphasenabscheidung (chemical vapour deposition), physikalische Gasphasenabscheidung (physical vapour deopisition) oder flüssig aufgebrachten, hartstoffverstärkten Einschmelzlegierungen beschichtet werden.

Alternativ oder zusätzlich kann das mindestens eine Erntegutbehandlungselement aus einem verschleißfesten Material bestehen. Als Grundmaterial für ein durchgängig aus einem verschleißfesten Material bestehende Erntegutbehandlungselement mit strömungstechnisch optimierter Vorderkante bieten sich härtbare Stahlwerkstoffe an. Diese Stahlwerkstoffe können nach der Formgebung einsatzgehärtet werden. Ebenso können diese Stahlwerkstoffe können nach der Formgebung induktiv oder konduktiv gehärtet werden. Weiterhin kann bei härtbaren Stahlwerkstoffen auf Presshärtung zurückgegriffen werden. Hierbei kann das Erntegutbehandlungselement unmittelbar nach der Formgebung in einem Werkzeug ganz oder nur bereichsweise gehärtet werden.

Dabei kann der Krümmungsradius der Vorderkante des Erntegutbehandlungselementes in Abhängigkeit von dem Material, aus dem das Erntegutbehandlungselement besteht, variieren. Mit zunehmender Härte des für das Erntegutbehandlungselement verwendeten Materials kann der Krümmungsradius kleiner gewählt werden, um sich einer scharfkantigen Form der Vorderkante anzunähern. Das Reduzieren des Krümmungsradius wird dabei durch das exponentiell ansteigende Verschleißen auf Grund der zunehmenden Flächenpressung beschränkt.

Bevorzugt kann das mindestens eine Erntegutbehandlungselement im Einlaufbereich einer als Axialabscheiderotor ausgeführten Abscheidevorrichtung angeordnet sein. Dabei kann der Axialabscheiderotor als Axial-Dresch-Trennrotor ausgeführt sein, dessen Dreschelemente leistenförmig ausgebildet sind. Ebenso kann der Axialabscheiderotor einer tangential arbeitenden Dreschvorrichtung nachgeordnet sein, der im Einlaufbereich als Leisten ausgebildete Erntegutbehandlungselemente aufweist, die als Leit- und Förderelemente für das Erntegut ausgeführt sind. In diesem Einlaufbereich trifft auf die mindestens eine Leiste neben Nichtkornbestandteilen auch Korn, welches gegenüber den Nichtkornbestandteilen eine höhere abrasive Wirkung entfaltet, deren Auswirkung auf das Verschleißverhalten der mindestens einen Leiste durch die beschriebenen Maßnahmen reduziert werden kann. An den Einlaufbereich des Axialabscheiderotors schließt sich ein Mittenbereich an, in dem das restliche Korn von der sich ausbildenden Strohmatte getrennt und durch Abscheidekörbe ausgeschieden wird. In diesem Mittenbereich können als so genannte Finger ausgeführte Erntegutbehandlungselemente angeordnet sein, die die Strohmatte auflockern. Auch diese Finger können entsprechend mit einer strömungsoptimierten Vorderkante ausgeführt sein.

Weiterhin kann das mindestens eine Erntegutbehandlungselement im Auslaufbereich einer als Axialabscheiderotor ausgeführten Abscheidevorrichtung angeordnet sein. Hierbei kann es als ein so genanntes Paddel ausgeführt sein.

Ebenso kann das mindestens eine Erntegutbehandlungselement als Schlagleiste ausgeführt sein, die koaxial zu einer Trommel einer als Dreschvorrichtung ausgeführten Abscheidevorrichtung auf deren Umfang angeordnet ist.

Die vorliegende Erfindung wird nachstehend anhand eines in den Zeichnungen dargestellten Ausführungsbeispieles näher erläutert.

Es zeigen:
- Fig. 1 :: schematische Ansicht eines Mähdreschers;
- Fig. 2 :: Explosionsansicht eines Abscheiderotors;
- Fig. 3 :: eine Detailansicht III gemäß Fig. 2.

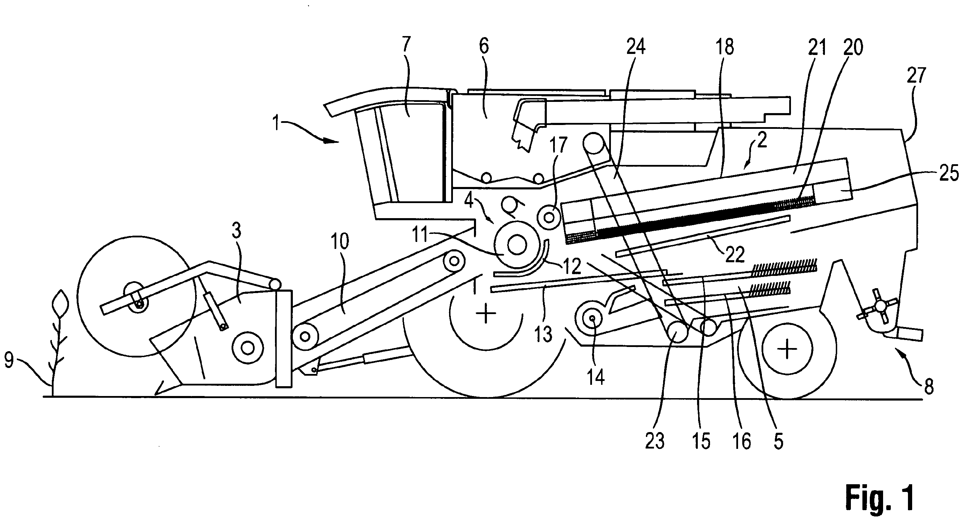

Der in Fig. 1 schematisch dargestellte Mähdrescher 1 mit zumindest einer Axialabscheidevorrichtung 2 besteht im Wesentlichen aus einem Schneidwerk 3, einer Drescheinrichtung 4, einer Reinigungseinrichtung 5, einem Korntank 6, einer Fahrerkabine 7 sowie aus einer der Axialabscheidevorrichtung 2 nachgeordneten Weiterbehandlungseinrichtung 8 für den Erntegutreststrom, wie einem Strohhäcksler und/oder einer dem Strohhäcksler nachgeordneten Verteileinrichtung.

Das vom Schneidwerk 3 abgeschnittene Erntegut 9 gelangt über einen Schrägförderkanal 10 zu einer nach dem Tangentialprinzip arbeitenden Dreschvorrichtung 4. Diese besteht aus einer Dreschtrommel 11 und einem zugeordneten Dreschkorb 12. Die am Dreschkorb 12 abgeschiedenen Erntegutbestandteile werden über einen Förderboden 13 zu einer aus einem Gebläse 14 und einem Ober- und Untersieb 15,16 bestehenden Reinigungseinrichtung 5 geleitet. Das den Dreschkorb 12 in tangentialer Richtung verlassende Korn-Kurzstroh-Gemisch wird in die Axialabscheidevorrichtung 2 gefördert.

Der Fördervorgang wird durch eine parallel zur Dreschtrommel 11 angeordnete, rotierende Wendetrommel 17 unterstützt.

Die Axialabscheidevorrichtung 2 ist in Längsrichtung des Mähdreschers 1 angeordnet und besteht im Wesentlichen aus einem feststehenden, in Förderrichtung FR ansteigenden, zylindrischen Gehäuse 18, in dem ein drehbar angetriebener Abscheiderotor 19 gelagert ist. Das Gehäuse 18 weist einen unteren Bereich mit Abscheidekörben 20 und einer geschlossenen oberen Korbabdeckung 21 mit an der Innenseite angeordneten Leiteinrichtungen zur Unterstützung der Förderbewegung des Erntegutes auf. Der Abscheiderotor 19 ist in axialer Richtung gesehen auf seinem Umfang mit verschiedenartig ausgebildeten Erntegutbehandlungselementen ausgestattet, wie beispielsweise Leisten 30, Finger 31 oder Paddel 32, denen teilweise die Funktion zukommt, den Abscheidevorgang zu intensivieren. Den Erntegutbehandlungselementen ist ihre quaderförmige Querschnittsform gemeinsam sowie funktionsbedingt der ständige Kontakt mit dem Erntegut, welches durch den Abscheiderotor 19 gefördert wird und dessen abrasive Wirkung.

An den Abscheidekörben 20 werden die im Erntegutgemisch enthaltenen Körner sowie Anteile von Kurzstroh und Spreu abgeschieden und über den darunter liegenden Rücklaufboden 22 zur Reinigungseinrichtung 5 gefördert. Die gereinigten Körner gelangen über eine Förderschnecke 23 und einen Elevator 24 in den Korntank 6. Innerhalb der Axialabscheidevorrichtung 2 wird das den Erntegutrest bildende Stroh beziehungsweise die Spreu in Richtung des Abgabebereiches 25 gefördert und gelangt von dort aus über eine Auslassbreite 26 verteilt in die Weiterbehandlungseinrichtung 8, die quer zur Fahrtrichtung an einem Rahmen unterhalb einer Strohauslaufhaube 27 befestigt ist.

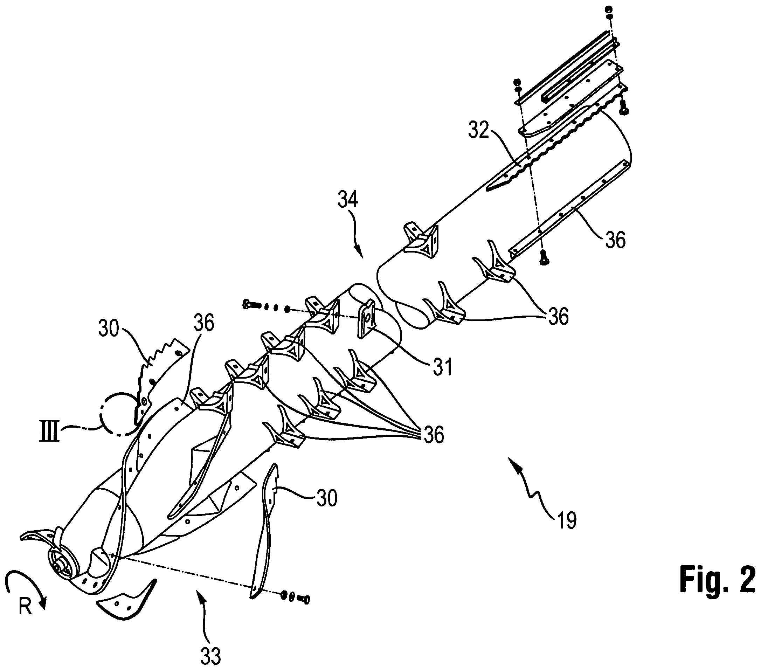

Die Darstellung in Fig. 2 zeigt den Abscheiderotor 19 der Axialabscheidevorrichtung 2. Der Abscheiderotor 19 gliedert sich im Wesentlichen in einen Einlaufbereich 33, einen Mittenbereich 34 sowie einen Auslaufbereich 35. Der Einlaufbereich 33 dient der Annahme des Erntegutes 9, welches im Wesentlichen aus Stroh und von diesem nach dem Ausdruschprozess mitgeführtem Korn besteht. Im Mittenbereich 34 des Abscheiderotors 19 wirken die Finger 31 auf die zwischen Abscheiderotor 19 und Abscheiderosten 20 beziehungsweise Korbabdeckung 21 sich ausbildende Erntegutmatte ein, um das restliche Korn aus dem Stroh herauszulösen und durch die Abscheidekörbe 20 abzuführen. Im Auslaufbereich 35 wird das Stroh an die Weiterbehandlungseinrichtung 8 abgegeben.

Wie bereits ausgeführt, weist der Abscheiderotor 19 in den jeweiligen Bereichen 33, 34, 35 unterschiedliche Erntegutbehandlungselemente auf, die an dem Abscheiderotor 19 mittels dafür auf diesem vorgesehenen Halterungen 36 lösbar befestigt sind. Die lösbare Befestigung der Erntegutbehandlungselemente ist dem Verschleiß geschuldet, dem die Erntegutbehandlungselemente bei der Verarbeitung des Erntegutes ausgesetzt sind. Das Verschleißverhalten wird einerseits durch das Material aus dem die Erntegutbehandlungselemente bestehen beeinflusst sowie andererseits durch die geometrische Form der verschiedenen Erntegutbehandlungselemente. Zudem hat die Art des zu verarbeitenden Erntegutes einen nicht unerheblichen Einfluss auf die Standzeit der Erntegutbehandlungselemente, da beispielsweise die Anforderungen an die Verschleißbeständigkeit bei der Verarbeitung von Reis als Erntegut besonders hoch sind.

Wie aus der Explosionsansicht gemäß der Fig. 2 ersichtlich ist, weisen die als Erntegutbehandlungselemente ausgeführten Leisten 30 in radialer Richtung gesehen einen im Wesentlichen quaderförmigen Querschnitt auf, obwohl sie in axialer Richtung gesehen eine gewundene Form besitzen können. Die Finger 31 sowie die Paddel 32 weisen ebenfalls einen im Wesentlichen quaderförmigen Querschnitt auf. Die Anordnung der Leisten 30, der Finger 31 sowie der Paddel 32 erfolgt in Rotationsrichtung R des Abscheiderotors 19 gesehen derart, dass diese zuerst mit dem Erntegut in Berührung kommen.

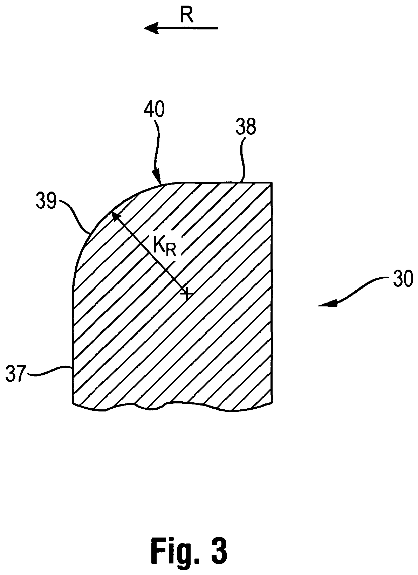

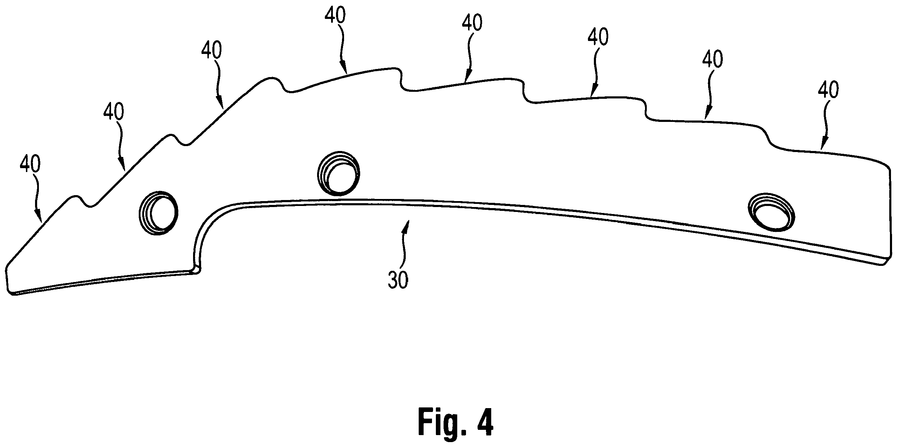

In Fig. 3 ist eine vergrößerte Detailschnittansicht III gemäß Fig. 2 einer Leiste 30 dargestellt. Die Darstellung zeigt den oberen Abschnitt der Leiste, dessen in Rotationsrichtung des Abscheiderotors 19 gewandte Vorderkante 40 zuerst mit dem Erntegut in Berührung kommt. Die Vorderkante 40 der Leiste 30, die sich zwischen einem im Wesentlichen senkrechten Abschnitt 37 und einem sich daran anschließenden im Wesentlichen waagerechten Abschnitt 38 ausbildet, weist einen strömungstechnisch optimierten, gekrümmten Verlauf auf. Der gekrümmte Verlauf der Vorderkante 40 führt dazu, dass die auftretende Flächenpressung in diesem Bereich, die durch das auftreffende Erntegut hervorgerufen wird, reduziert wird. Somit wird der Verschleiß der Oberfläche der Vorderkante 40 deutlich reduziert. Der Verlauf der konvex ausgebildeten Vorderkante 40 wird durch ihren Krümmungsradius KR beschrieben. Dabei variiert der Krümmungsradius KR in Abhängigkeit von der Härte des Materials, aus dem das Erntegutbehandlungselemente wie die Leiste 30, der Finger 31 oder das Paddel 32 bestehen. Mit zunehmender Härte des Materials, aus dem das Erntegutbehandlungselement besteht, kann der Krümmungsradius KR kleiner gewählt werden. Da im Allgemeinen das Grundmaterial, aus dem das Erntegutbehandlungselement besteht, aus Gründen der Bearbeitbarkeit nicht von sehr hoher Härte ist, wird eine Verschleißschutzschicht in Form einer Beschichtung 39 auf die Vorderkante 40 aufgebracht. Das für die Beschichtung 39 verwendete Material weist eine deutlich höhere Härte auf als das Grundmaterial des Erntegutbehandlungselementes. Auch bei der Beschichtung der Vorderkante 40 besteht eine Abhängigkeit zwischen der Härte des für die Beschichtung 39 verwendeten Materials und dem Krümmungsradius KR, der den Verlauf der Vorderkante 40 beschreibt. Der strömungstechnisch optimierte, gekrümmte Verlauf der Vorderkante 40 ist auch beim Auftragen einer Beschichtung 39 von Vorteil, da die Beschichtung 39 auf Grund der reduzierten Flächenpressung nicht in dem Maße beansprucht respektive abgetragen wird, wie es bei einem scharfkantigen Verlauf der Vorderkante gemäß dem Stand der Technik der Fall ist.

**Bezugszeichenliste**

| | | | |
|---|---|---|---|
| **1** | Mähdrescher | **30** | Leiste |
| **2** | Axialabscheidevorrichtung | **31** | Finger |
| **3** | Schneidwerk | **32** | Paddel |
| **4** | Drescheinrichtung | **33** | Einlaufbereich |
| **5** | Reinigungseinrichtung | **34** | Mittenbereich |
| **6** | Korntank | **35** | Auslaufbereich |
| **7** | Fahrerkabine | **36** | Halterungen |
| **8** | Weiterbehandlungseinrichtung | **37** | Senkrechter Abschnitt |
| **9** | Erntegut | **38** | Waagerechter Abschnitt |
| **10** | Schrägförderkanal | **39** | Beschichtung |
| **11** | Dreschtrommel | **40** | Vorderkante |
| **12** | Dreschkorb | | |
| **13** | Förderboden | **R** | Rotationsrichtung |
| **14** | Gebläse | **KR** | Krümmungsradius |
| **15** | Untersieb | **FR** | Förderrichtung |
| **16** | Obersieb | | |
| **17** | Wendetrommel | | |
| **18** | Gehäuse | | |
| **19** | Abscheiderotor | | |
| **20** | Abscheiderost | | |
| **21** | Korbabdeckung | | |
| **22** | Rücklaufboden | | |
| **23** | Förderschnecke | | |
| **24** | Elevator | | |
| **25** | Abgabebereich | | |
| **26** | Auslassbreite | | |
| **27** | Strohauslaufhaube | | |
| **28** | | | |
| **29** | | | |

## Patentansprüche

1. Abscheidevorrichtung (2, 4), die rotierend angetriebene Komponenten (11, 19) sowie ortsfeste Komponenten aufweist, mit mindestens einem sich zumindest abschnittsweise quer zur Rotationsrichtung (R) der angetriebenen Komponenten (11, 19) erstreckenden Erntegutbehandlungselement (30, 31, 32) zur Bearbeitung von Erntegut aufweist, **dadurch gekennzeichnet, dass** das mindestens eine als Leiste ausgeführte Erntegutbehandlungselement (30, 31, 32), das einen im Wesentlichen quaderförmigen Querschnitt aufweist, eine entgegen einer Förderrichtung (FR) des Erntegutes weisende Vorderkante (40) mit einem strömungstechnisch optimierten, gekrümmten Verlauf aufweist, wobei die in axialer Richtung des Erntegutbehandlungselementes (30, 31, 32) verlaufende Vorderkante (40) den Übergang von einem im Wesentlichen senkrechten Abschnitt (37) des Erntegutbehandlungselementes (30, 31, 32) zu einem im Wesentlichen waagerecht verlaufenden Abschnitt (38) bildet, und dass die Vorderkante (40) zumindest abschnittsweise mit einer Beschichtung (39) zur Erhöhung der Verschleißfestigkeit versehen ist.

2. Abscheidevorrichtung (2, 4) nach Anspruch 1, **dadurch gekennzeichnet, dass** der Verlauf der Vorderkante (40) konvex ist.

3. Abscheidevorrichtung (2, 4) nach einem der Ansprüche 1 oder 2, **dadurch gekennzeichnet, dass** der gekrümmte Verlauf der Vorderkante (40) des Erntegutbehandlungselementes (30, 31, 32) einen Krümmungsradius (KR) aufweist, der in Abhängigkeit von dem Material, aus dem die Beschichtung besteht, variiert.

4. Abscheidevorrichtung (2, 4) nach einem der Ansprüche 1 bis 3, **dadurch gekennzeichnet, dass** die mindestens eine Leiste (30, 31, 32) aus einem verschleißfesten Material besteht.

5. Abscheidevorrichtung (2, 4) nach Anspruch 4, **dadurch gekennzeichnet, dass** der Krümmungsradius (KR) der Vorderkante (40) der Leiste (30, 31, 32) in Abhängigkeit von dem Material, aus dem das Erntegutbehandlungselement (30. 31, 32) besteht, variiert.

6. Abscheidevorrichtung (2, 4) nach einem der Ansprüche 1 bis 5, **dadurch gekennzeichnet, dass** das mindestens eine Erntegutbehandlungselement (30, 31, 32) im Einlaufbereich (33) einer als Axialabscheiderotor (19) ausgeführten Abscheidevorrichtung (4) angeordnet ist.

7. Abscheidevorrichtung (2, 4) nach einem der Ansprüche 1 bis 6, **dadurch gekennzeichnet, dass** das mindestens eine Erntegutbehandlungselement (30, 31, 32) im Auslaufbereich (35) einer als Axialabscheiderotor (19) ausgeführten Abscheidevorrichtung (4) angeordnet ist.

8. Abscheidevorrichtung (2, 4) nach einem der Ansprüche 1 bis 6, **dadurch gekennzeichnet, dass** das mindestens eine Erntegutbehandlungselement (30, 31, 32) als Schlagleiste ausgeführt ist, welche koaxial zu einer Trommel (11) einer als Dreschvorrichtung (4) ausgeführten Abscheidevorrichtung auf deren Umfang angeordnet ist.

## Claims

1. A separating apparatus (2, 4) which has rotationally driven components (11, 19) and stationary components, comprising at least one crop material processing element (30, 31, 32) for processing crop material, that extends at least portion-wise transversely relative to the direction of rotation (R) of the driven components (11, 19), **characterised in that** the at least one crop material processing element (30, 31, 32) which is in the form of a bar and which is of a substantially cuboidal cross-section has a front edge (40) facing in opposite relationship to a conveyor direction (FR) of the crop material, of a fluidically optimised curved configuration, wherein the front edge (40) extending in the axial direction of the crop material processing element (30, 31, 32) forms the transition from a substantially perpendicular portion (37) of the crop material processing element (30, 31, 32) to a substantially horizontally extending portion (38), and that the front edge (40) is provided at least portion-wise with a coating (39) to increase wear resistance.

2. A separating apparatus (2, 4) according to claim 1 **characterised in that** the configuration of the front edge (40) is convex.

3. A separating apparatus (2, 4) according to one of claims 1 and 2 **characterised in that** the curved configuration of the front edge (40) of the crop material processing element (30, 31, 32) has a radius of curvature (KR) which varies in dependence on the material from which the coating is made.

4. A separating apparatus (2, 4) according to one of claims 1 to 3 **characterised in that** the at least one bar (30, 31, 32) comprises a wear-resistant material.

5. A separating apparatus (2, 4) according to claim 4 **characterised in that** the radius of curvature (KR) of the front edge (40) of the bar (30, 31, 32) varies in dependence on the material from which the crop material processing element (30, 31, 32) is made.

6. A separating apparatus (2, 4) according to one of claims 1 to 5 **characterised in that** the at least one crop material processing element (30, 31, 32) is arranged in the intake region (33) of a separating apparatus (4) in the form of an axial separating rotor (19).

7. A separating apparatus (2, 4) according to one of claims 1 to 6 **characterised in that** the at least one crop material processing element (30, 31, 32) is arranged in the outlet region (35) of a separating apparatus (4) in the form of an axial separating rotor (19).

8. A separating apparatus (2, 4) according to one of claims 1 to 6 **characterised in that** the at least crop material processing element (30, 31, 32) is in the form of a beater bar which is arranged coaxially relative to a drum (11) of a separating apparatus in the form of a threshing apparatus (4) on the periphery thereof.

## Revendications

1. Dispositif de séparation (2, 4) qui comporte des composants entraînés en rotation (11, 19) ainsi que des composants fixes, comprenant au moins un élément de manipulation de produit récolté (30, 31, 32) qui, au moins par endroits, s'étend transversalement au sens de rotation (R) des composants entraînés (11, 19) et sert à traiter du produit récolté, **caractérisé en ce que** le au moins un élément de manipulation de produit récolté conformé en barrette (30, 31, 32), qui présente une section transversale sensiblement parallélépipédique, présente un bord avant (40) qui est orienté à l'opposé d'une direction de convoyage (FR) du produit récolté et qui possède un tracé courbe optimisé sur le plan de l'écoulement, le bord avant (40) qui s'étend dans la direction axiale de l'élément de manipulation de produit récolté (30, 31, 32) formant la transition d'une portion sensiblement verticale (37) de l'élément de manipulation de produit récolté (30, 31, 32) vers une portion à tracé sensiblement horizontal (38), et **en ce que** le bord avant (40) est muni au moins par endroits d'un revêtement (39) pour augmenter la résistance à l'usure.

2. Dispositif de séparation (2, 4) selon la revendication 1, **caractérisé en ce que** le tracé du bord avant (40) est convexe.

3. Dispositif de séparation (2, 4) selon une des revendications 1 ou 2, **caractérisé en ce que** le tracé courbe du bord avant (40) de l'élément de manipulation de produit récolté (30, 31, 32) présente un rayon de courbure (KR) qui varie en fonction du matériau dont est constitué le revêtement.

4. Dispositif de séparation (2, 4) selon une des revendications 1 à 3, **caractérisé en ce que** la au moins une barrette (30, 31, 32) est constituée d'un matériau résistant à l'usure.

5. Dispositif de séparation (2, 4) selon la revendication 4, **caractérisé en ce que** le rayon de courbure (KR) du bord avant (40) de la barrette (30, 31, 32) varie en fonction du matériau dont est constitué l'élément de manipulation de produit récolté (30, 31, 32).

6. Dispositif de séparation (2, 4) selon une des revendications 1 à 5, **caractérisé en ce que** le au moins un élément de manipulation de produit récolté (30, 31, 32) est disposé dans la zone d'entrée (33) d'un dispositif de séparation (4) conformé en rotor de séparation axial (19).

7. Dispositif de séparation (2, 4) selon une des revendications 1 à 6, **caractérisé en ce que** le au moins un élément de manipulation de produit récolté (30, 31, 32) est disposé dans la zone de sortie (35) d'un dispositif de séparation (4) conformé en rotor de séparation axial (19).

8. Dispositif de séparation (2, 4) selon une des revendications 1 à 6, **caractérisé en ce que** le au moins un élément de manipulation de produit récolté (30, 31, 32) est conformé en batte qui est disposée coaxialement à un tambour (11) d'un dispositif de séparation conformé en dispositif de battage (4), sur la périphérie de celui-ci.
